# EUROPEAN PATENT SPECIFICATION

(11) **EP 0 450 020 B1**
(45) Date of publication and mention of the grant of the patent: **30.11.1994**
(21) Application number: 90915311.6
(22) Date of filing: 02.10.1990
(51) Int. Cl.: B60J 3/02

(54) **MIRROR FOR SUN VIZOR OF MOTOR VEHICLES PROVIDED WITH A HINGED COVER**
SPIEGEL FÜR KRAFTFAHRZEUGSONNENBLENDE MIT KLAPPBAREM SPIEGEL
MIROIR POUR VISIERE PARE-SOLEIL DE VEHICULES AUTOMOBILES POURVU D'UN CACHE RABATTABLE

(30) Priority: 06.10.1989 ES 8903367
(43) Date of publication of application: 09.10.1991
(73) Proprietor: FICO I.T.M., S.A., E-08027 Barcelona (ES)
(72) Inventor: GABAS CEBOLLERO, Carlos, E-08029 Barcelona (ES)
(74) Representative: Schwabe - Sandmair - Marx
(86) International application number: PCT/ES90/00032
(87) International publication number: WO 91/04878

(56) References cited:
- FR-A- 2 396 667
- FR-A- 2 545 046
- US-A- 4 213 169

## Description

The present invention relates to a vanity mirror assembly adapted for mounting on an interior motor vehicle sun visor.

Constant technological improvements are being made to sun visors with which motor vehicles are equipped, particularly the passanger side sun visor, and especially to the so-called vanity mirror. i.e. the unit formed by the reflective surface and all the assembly and mounting members inherent therein.

The vanity mirrors may be provided with devices for discretional concealment of the reflective surface, such devices having functionality and finish to match the interior of the vehicle passenger compartment. The reflective constant of the mirror surface are to be preserved and. therefore, the original quality of the image provided by said surface.

In this context: three Spanish Utility Models are known, i.e. ES-U-276,352 "Improved sun visor for motor vehicles", ES-U-276,353 " Improved sun visor for motor vehicles" and ES-U-276,822 "New sun visor for motor vehicles".

The above utility models ES-U-276,352 and ES-U-276,353 are based on a reflective surface concealing device with a hingedly mounted external covering flap, and the aforesaid utility model ES-U-276,822 is based on a concealing device with a cover sliding in longitudinal guideways which may in turn be concealed in the sun visor structure.

These three prior Spanish utility models ES-U-276,352, ES-U-276,353 and ES-U-276,822 are all substantially complex to manufacture and assemble in the sun visor structures currently available on the market and all cause the costs of producing thus-formed end products to rise.

From United States Patent US-A-4,213,169 from which the preamble of claim 1 starts an illuminated covered visor mirror for mounting within a vehicle visor is known. Said visor mirror comprises a generally rectangular frame having a central rectangular opening into which there is secured a mirror. A peripheral trim flange surrounds and extends over the edge of a recess in the visor body when the mirror assembly is mounted on the visor body. A cover is mounted hingely on said frame by means of integrally formed mounting bosses comprising hinge pins or pintles which are accomodated by corresponding sockets by means of arms. The mirror frame is secured in the visor body by means of posts provided within a recess in the visor body, these posts being adapted to receive screws.

A sun visor mirror as proposed by the above-mentioned documents, however, shows certain disadvantages which will now be described in further detail.

The cover is initially installed in a frame by inserting forwardly the forward edge of said cover through a slot until the apex of the pintles contacts an inclined surface 45, and is then pressed into the socket by spreading arms and until the sockets accomodate the apex. The mirror assembly is afterwards mounted on the sun visor, and as a result of this type of construction the cover cannot be removed again unless the whole mirror assembly is dismounted from the sun visor.

A further disadvantageous feature of this prior art Visor mirror concerns the fact that a variety of component parts (post, screws, frame) are necessary to mount the mirror assembly onto a sun visor. Resulting therefrom are increased production and assembling costs. Production costs are also raised by the complex structure of the great number of integral component parts to be molded during the production process of the frame according to this US patent's teaching.

The mirror to be inserted into the frame is disadvantageously only held at its edges by a rectangular ridge. Therefore no support from the backside is provided to this fragile part.

With a view to providing a new, economical solution to the problem raised by the concealment of the reflective surface of the so-called vanity mirror normally integrated in the structure of the passenger side sun visor, there is disclosed a mirror for motor vehicle sun visors provided with a hinged cover with a structure and functionality substantially different from all prior art known to the inventor.

The above-mentioned problems of the prior art sun visor mirrors are overcome by a mirror showing the features in the characterizing portion of claim 1.

An embodiment of the claimed mirror for motor vehicle sun visors provided with a hinged cover is that the means for hingedly coupling the hinged cover for concealing the reflective surface is formed on the inner facing surfaces of the extension and comprises two projections of sufficient dimensions which, respectively, extend perpendicularly to said facing surfaces and on which there are formed a sufficient number of planes determining the position of concealment of the reflective surface by said hinged cover.

In another embodiment of the claimed mirror for motor vehicle sun visors provided with a hinged cover, the hinged cover for concealing the reflective surface of the mirror is an essentially rectangular one-piece member, in which there is formed the means for coupling said cover to the mirror frame as well as the means for facilitating user operation of said cover once coupled to the mirror frame.

The means for coupling the hinged cover to the mirror frame is formed in the ends of one of the longer sides of said cover and consists of corresponding U-shaped clamps extending substantially obliquely from the transverse axis of said cover, said clamps being of sufficient size and provided with an internal contour snugly corresponding with the respective contour of the projections formed on the facing inner surfaces of the mirror frame extension. These clamps and projections allow, when engaged with each other, the hinged cover to pivot and occupy a wide range of set positions of use.

In another embodiment of the claimed mirror for motor vehicle sun visors provided with a hinged cover, when the mirror frame is engaged with the cover and the latter is in the reflective-surface concealing position, the joint action of the positioning planes formed on the projections disposed on the facing surfaces of the mirror frame extension and the positioning planes on the clamps of the hinged cover prevents said cover from leaving said position under normal conditions of use: either because of wear or because of vibrations caused by the vehicle when running.

The broad range of set positions of use mentioned above is understood to extend between the position of concealment of the reflective surface of the mirror and that of use, under normal conditions, of said reflective surface.

To facilitate manipulation of the mirror cover by the user when it is engaged with the mirror frame said cover is provided on the front surface thereof with an easily actuatable and sufficiently dimensioned projection.

The claimed mirror for motor vehicle sun visors provided with a hinged cover is illustrated in the accompanying sheets of drawings in which:
- Figure 1: shows a rear view of the vanity mirror assembly of the invention with the constituent members, i.e. the mirror frame and the hinged cover, being engaged with one another.
- Figure 2: shows a cross-section view on the line II-II of Figure 1.
- Figure 3: shows a rear view of the mirror frame forming the object of the invention.
- Figure 4: shows a cross-section view on the line IV-IV of Figure 3.
- Figure 5: shows a detailed view, partly in section, of the mirror frame.
- Figure 6: shows a rear view of the cover forming the vanity mirror assembly of the invention.
- Figure 7: shows a cross-section view on the line VII-VII of Figure 6.
- Figure 8: shows a perspective detail of the mirror frame forming the vanity mirror assembly of the invention.

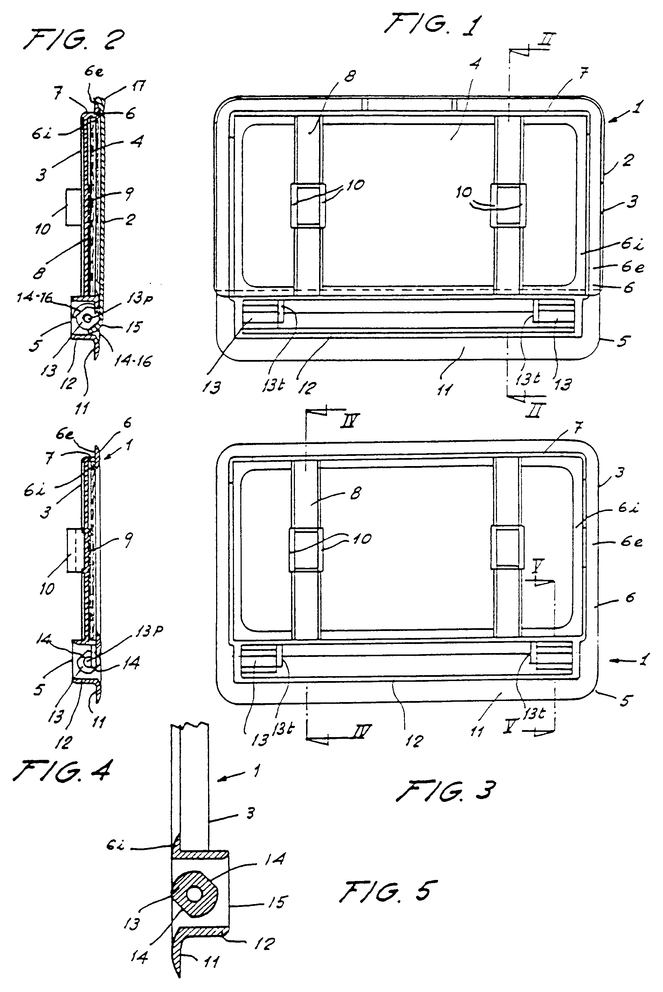

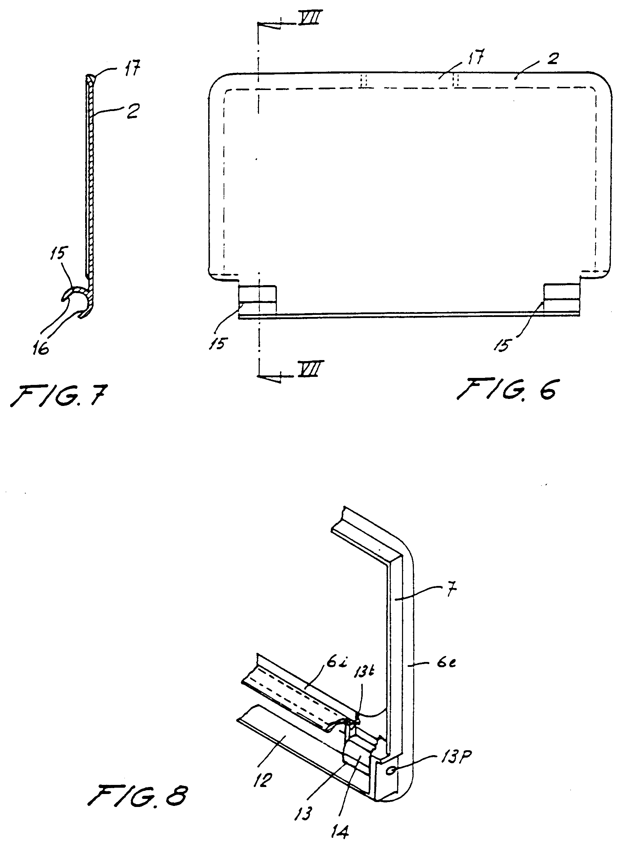

The claimed mirror for motor vehicle sun visors provided with a hinged cover as described herein is formed, as shown in Figures 1 and 2, by a one-piece mirror frame 1 and by a hinged cover 2, both members being made preferably of plastic materials and with mechanical properties appropriate for each particular application.

The mirror frame 1 which in this embodiment is approximately rectangular and extends along the perifery of said plate 4 containing the reflective surface of the mirror, and the extension 5 in which there are formed the means for retaining and pivoting the hinged cover 2 which is designed to conceal said reflective surface are shown in detail in Figures 1, 2, 3 and 4.

The mirror frame 1 is formed by a peripheral trim flange 6 which in turn forms an inner flange 6i and an outer flange 6e, and by a central rib 7 which, as shown in Figures 1, 2, 3, 4 and 8, is perpendicular to the plane of the said peripheral trim flange 6.

Figures 1 and 3 show how two suitably spaced apart struts 8 extend between the two longer sides of the frame 3. These struts 8 act as structural reinforcement for the mirror frame 1 and therein there are formed the retaining means for the plate 4 containing the reflective surface of the mirror and the means for anchoring the mirror frame 1 in the sun visor structure (not shown in the accompanying drawings).

In Figures 2 and 4 of the accompanying drawings, it can be seen how both struts 8 are provided intermediately on the front face thereof, in the normal position of use, with respective areas 9 with recesses for retaining the plate 4. These recesses prevent any movement or vibration of the plate 4 once mounted on the mirror frame 1. It is also to be seen in Figures 2 and 4 how the struts 8 are provided intermediately on the rear surface thereof, in the normal position of use with respective retaining tabs 10 for anchoring the mirror frame 1 in the sun visor structure.

Figures 3 and 4 show in detail how the extension 5, in which the means for retaining and pivoting the hinged cover 2 is formed, is constituted by an outer wing 11 and by a rib 12 perpendicular to the plane of the said outer wing 11 and acting as structural reinforcement member.

Said outer flange 6e and outer wing 11 are designed to cover the perifery of the opening allowing the claimed mount of the mirror onto the sun visor with sufficient play, thereby concealing said perifery which may be produced by machining and usually has an irregular profile.

The means for retaining and pivoting the hinged cover 2 are comprised, as shown in Figures 1: 2, 3, 4 and 8, of two projections 13 which are located respectively on the facing surfaces of the extension 5 of the mirror frame 1 and which extend perpendicularly to said facing surfaces: the respective axes thereof being aligned. On said projections 13 the planes 14 are formed which determine the concealment position of said reflective surface.

To increase the strength of the projections 13 against the mechanical demands foreseeable when being operated by the user, there are provided two struts 13t which respectively connect the corresponding free ends of the projections 13 with the central rib 7, as shown in Figures 1, 3 and 8 of the accompanying drawings.

The through hole 13p formed in the projections 13 and shown in Figures 2, 4, 5 and 8 of the accompanying drawings is merely a result of the manufacturing process of the mirror frame 1 and has no operative function with regard to the invention.

Figures 6 and 7 show in detail the hinged cover 2, the essentially rectangular shape of which matches the maximum dimensions in this embodiment of the frame 1.

At the respective ends of one of the longer sides of the said hinged cover 2 there are formed the U-shaped clamps 15 which, as shown in Figure 7, extend generally obliquely relative to the transverse axis of said hinged cover 2. Both clamps 15 are provided with an inner contour or cross-section snugly mating with the respective contour of the projections 13 formed on the facing inner surfaces of the extension 5 of the mirror frame 1.

It is extremely simple to mount the hinged cover 2 on the mirror frame 1 and no tools are required by simply engaging the clamps 15 and the projections 13 by matching up their planes, i.e. pressing the latter into said clamps 15, both the mirror frame 1 and the hinged cover 2 being thus firmly connected.

Once the hinged cover 2 is coupled to the mirror frame 1, the user may set positions of use of said hinged cover 2 over a wide range, i.e. between the position of concealment of the reflective surface of the mirror and that of use of the said reflective surface under normal conditions.

Figure 2 shows precisely the hinged cover 2 in the position concealing the mirror reflective surface. It is in this position that the joint action of the planes 14 defining this concealment position and being formed on the projections 13, and the mating planes 16 formed on the clamps 15 of the hinged cover 2 prevents said hinged cover 2 from leaving said position under normal conditions of use as a result of wear or by vibration of the vehicle when running.

To facilitate the claimed operations of use by the user of the hinged cover 2 of the mirror when it is coupled to the mirror frame 1, said hinged cover 2 is provided with a projection 17 of sufficient size and shown in Figures 2, 6 and 7 of the accompanying drawings.

## Claims

1. A vanity mirror assembly adapted to be mounted on a central rectangular recess in a sun visor body, the vanity mirror assembly comprising a vanity mirror frame (1) integrally formed as one piece and a vanity mirror cover (2) hingedly coupled with the vanity mirror frame (1), the vanity mirror frame (1) including a peripheral trim flange (6) formed of an inner framing portion (6i) extending over the edges of a mirror plate (4), an outer flange portion (6e) extending over the edges of the central rectangular recess in the sun visor body and a central ridge (7) extending between said inner and outer portions (6i, 6e) and perpendicularly to the plane common to said portions (6i, 6e), characterised in that the vanity mirror frame (1) further includes:
- two struts (8), each extending between the longitudinal sides of the peripheral trim flange (6) such that they retain the mirror plate (4) with the peripheral trim flange (6), said struts (8) having on their one side means ("reliefs (9)") for retaining the mirror plate and on their opposite side retaining tabs (10) for engagement in appropriate housings provided in the sun visor body recess and
- an extension (5) along one longitudinal side of the peripheral trim flange (6) including a substantially large outer wing (11) and a ridge (12) perpendicular thereto acting as a structural reinforcement member such that the outer wing (11) and the outer flange portion (6e) are adapted to surround and extend over the edges of said rectangular recess in the sun visor body, the means (13, 14) for hingedly coupling the vanity mirror cover (2) with the vanity mirror frame (1) being formed on said extension (5)."

2. A vanity mirror assembly according to claim 1, wherein the means (13) for hingedly coupling said cover (2) for concealing the reflective surface is formed on the inner facing surfaces of the extension (5) and comprises two projections (13) of sufficient dimensions which, respectively, extend perpendicularly to said facing surfaces and in which there are formed a sufficient number of faces (14) delimiting the position of concealment of the reflective surface by said hinged cover.

3. A vanity mirror assembly according to one of the claims 1 or 2, wherein the hinged cover (2) is an essentially rectangular one-piece member, and in which there are formed means for coupling said cover (2) to the mirror frame (1) as well as means facilitating user operation of said cover (2) once coupled to the mirror frame (1).

4. A vanity mirror assembly according to one of the claims 1 to 3, wherein the means for coupling the hinged cover (2) to the mirror frame (1) is formed in the ends of one of the longer sides of said hinged cover (2) and consists of corresponding U-shaped clamps (15) extending substantially obliquely from the transverse axis of said hinged cover (2), said clamps (15), being of sufficient length and provided with an internal contour snugly corresponding with the respective contour of said projections (13) such that when said clamps (15) and projections (13) are engaged with each other, the said hinged cover (2) may pivot and occupy set positions of use over a wide range.

5. A vanity mirror assembly according to one of the claims 1 to 4, wherein when the mirror frame (1) and the hinged cover (2) are engaged together and the latter is in the reflective surface concealing position, the joint action of the positioning faces (14, 16) formed on the projections (13) and clamps (15) prevent said cover (2) from unexpectedly coming out of said position under normal conditions of use.

## Patentansprüche

1. Kosmetikspiegelbaugruppe zur Befestigung an einer zentralen rechteckigen Aussparung in einem Sonnenblendenkörpern, wobei die Kosmetikspiegelbaugruppe einen integral als ein Stück ausgebildeten Kosmelikspiegelrahmen (1) und einen gelenkig mit dem Kosmetikspiegelrahmen (1) gekoppelten Kosmetikspiegeldeckel (2) aufweist, wobei der Kosmetikspiegelrahmen (1) einen Umfangs-Verkleidungsflansch (6), der aus einem inneren Rahmenabschnitt (6i) gebildet ist, welcher sich über die Kanten einer Spiegelplatte (4) erstreckt, einen äußeren Flanschabschnitt (6e), der sich über die Kanten der zentralen rechtwinkligen Aussparung im Sonnenblendenkörper erstreckt, und eine zentrale Rippe (7) aufweist, die sich zwischen den inneren und äußeren Abschnitten (6i, 6e) und rechtwinklig zu der den Abschnitten (6i, 6e) gemeinsamen Fläche erstreckt, dadurch gekennzeichnet, daß der Kosmetikspiegelrahmen (1) ferner enthält:
- zwei Streben (8), von denen sich jede zwischen den Lägsseiten des Umfangs-Verkleidungsflansches (6) erstreckt, so daß sie die Spiegelplatte (4) mit dem Umfangs-Verkleidungsflansch (6) halten, wobei die Streben (8) auf ihrer einen Seite Einrichtungen ("Aussparungen (9)") zum Halten der Spiegelplatte und auf ihrer gegenüberliegenden Seite Haltestreifen (10) zum Eingriff in geeignete in der Sonnenblenden-Aussparung vorgesehene Gehäuse haben, und
- eine Verlängerung (5) entlang einer Längsseite des Umfangs-Verkleidungsflansches (6) mit einem im wesentlichen großen äußeren Flügel (11) und einem dazu rechtwinkligen Steg (12), der als Strukturverstärkung wirkt, so daß der äußere Flügel (11) und der äußere Flanschabschnitt (6e) angepaßt sind, um die Kanten der rechteckigen Aussparung im Sonnenblendenkörper zu umschließen und sich über sie hinaus zu erstrecken, wobei die Einrichtung (13, 14) zum gelenkigen Koppeln des Deckels (2) des Kosmetikspiegels mit dem Kosmetikspiegelrahmen (1) an der Verlängerung (5) ausgebildet ist.

2. Kosmetikspiegelbaugruppe nach Anspruch 1, bei der die Einrichtung (13) zum gelenkigen Koppeln des Deckels (2) zum Verbergen der reflektierenden Oberfläche an den inneren, zugewandten Oberflächen der Verlängerung (5) ausgebildet ist und zwei Vorsprünge (13) von ausreichender Größe aufweist, welche sich jeweils rechtwinklig zu den zugewandten Oberflächen erstrecken und in welchen eine ausreichende Anzahl von Flächen (14) ausgebildet ist, die die Stellung des Verbergens der reflektierenden Oberfläche durch den angelenkten Deckel eingrenzen.

3. Kosmetikspiegelbaugruppe nach einem der Ansprüche 1 oder 2, bei der der angelenkte Deckel (2) ein im wesentlichen rechtwinkliges einteiliges Bauteil ist, und bei der Einrichtungen zum Koppeln des Deckels (2) an dem Spiegelrahmen (1) sowie Einrichtungen ausgebildet sind, die die Bedienung des Deckels (2) durch einen Benutzer vereinfachen, wenn er einmal mit dem Spiegelrahmen (1) gekoppelt ist.

4. Kosmetikspiegelbaugruppe nach einem der Ansprüche 1 bis 3, bei der die Einrichtung zum Koppeln des angelenkten Deckels (2) an den Spiegelrahmen (1) in den Enden einer der längeren Seiten des angelenkten Deckels (2) ausgebildet ist und aus entsprechenden U-förmigen Klammern (15) besteht, die sich im wesentlichen schräg von der Querachse des angelenkten Deckels (2) erstrecken, wobei die Klammer (15) von ausreichender Länge und mit einer Innenkontur versehen sind, die in eng anliegender Weise der jeweiligen Kontur der Vorsprünge (13) entspricht, so daß, wenn die Klammer (15) und die Vorsprünge (13) miteinander in Eingriff kommen, der angelenkte Deckel (2) sich drehen und über einen weiten Verwendungsbereich eingestellte Positionen einnehmen kann.

5. Kosmetikspiegelbaugruppe nach einem der Ansprüche 1 bis 4, bei der, wenn der Spiegelrahmen (1) und der angelenkte Deckel (2) miteinander in Eingriff sind, und letzterer in der die reflektierende Oberfläche verbergenden Stellung ist, das Zusammenwirken der positionierenden Flächen (14, 16), die an den Vorsprüngen (13) und Klammer (15) ausgebildet sind, verhindert, daß der Deckel (2) unvermutenderweise bei normalen Gebrauchsbedingungen seine Position verläßt.

## Revendications

1. Miroir de courtoisie adapté de manière à pouvoir être monté dans un évidement rectangulaire central ménagé dans un corps de pare-soleil, ce miroir de courtoisie comprenant une monture de miroir (1) formée entièrement d'une seule pièce, et un élément de recouvrement (2) du miroir proprement dit, relié au moyen d'une articulation, à la monture de miroir (1), ladite monture (1) de miroir comprenant une bride d'encadrement périphérique (6) constituée d'une portion de monture intérieure (6i) s'étendant devant les bords d'une plaque réfléchissante (4), d'une portion de bride extérieure (6e), s'étendant devant les bords de l'évidement rectangulaire central ménagé dans le corps du pare-soleil, et d'une nervure centrale (7), s'étendant entre lesdites portions intérieure et extérieure (6i, 6e) et perpendiculairement au plan commun auxdites portions (6i, 6e), caractérisé en ce que la monture de miroir de courtoisie (1) comprend, en outre :
- deux entretoises (8), s'étendant, chacune, entre les côtés longitudinaux de la bride d'encadrement périphérique (6), de manière à retenir la plaque réfléchissante (4), de concert avec la bride d'encadrement périphérique (6), lesdites entretoises (8) présentant, sur l'une de leurs faces, des moyens ("reliefs (9)") pour retenir la plaque réfléchissante, et, sur leur face opposée, des attaches de retenue (10) destinées être engagées dans des logements adéquats, prévus dans l'évidement du corps du pare-soleil, et
- une extension (5) le long de l'un des côtés longitudinaux de la bride d'encadrement périphérique (6), comprenant une aile extérieure (11, relativement large, et une nervure (12) qui lui est perpendiculaire, servant d'élément de renforcement structurel, de telle sorte que l'aile extérieure (11) et la portion de bride extérieure (6e) sont adaptées pour entourer et s'étendre devant les bords dudit évidement rectangulaire ménagé dans le corps du pare-soleil, les moyens (13, 14) permettant de raccorder, de manière articulée, l'élément de recouvrement (2) de la surface réfléchissante à la monture de miroir (1) étant prévus sur ladite extension (5).

2. Miroir de courtoisie selon la revendication 1, dans lequel le moyen (13) pour raccorder, de manière articulée, l'élément de recouvrement (2) permettant de masquer la surface réfléchissante, est prévu sur les surfaces intérieures en regard de l'extension (5), et comprend deux saillies (13) de dimensions suffisantes, qui s'étendent chacune perpendiculairement auxdites surfaces en regard, et dans lesquelles sont prévues des faces (14), en nombre suffisant, qui délimitent la position de masquage de la surface réfléchissante par ledit élément de recouvrement articulé.

3. Miroir de courtoisie selon l'une des revendication 1 ou 2, dans lequel l'élément de recouvrement articulé (2) est un élément monobloc de forme essentiellement rectangulaire, dans lequel sont prévus des moyens permettant de raccorder ledit élément de recouvrement (2) à la monture de miroir (1), ainsi que des moyens facilitant à l'utilisateur la manoeuvre dudit élément de recouvrement (2), lorsque ce dernier est raccordé à la monture de miroir (1).

4. Miroir de courtoisie selon l'une des revendications 1 à 3, dans lequel le moyen pour raccorder l'élément de recouvrement articulé (2) à la monture de miroir (1), est prévu dans les extrémités de l'un des plus longs côtés dudit élément de recouvrement articulé (2), et consiste en des attaches (15) correspondantes, en forme de U, qui s'étendent substantiellement en oblique, à partir de l'axe transversal dudit élément de recouvrement articulé (2), lesdites attaches (15) étant de longueur suffisante et dotées d'un profil intérieur correspondant, de manière bien ajustée, au profil respectif desdites saillies (13), de façon que lorsque lesdites attaches (15) et saillies (13), sont en prise, ledit élément de recouvrement articulé (2) peut pivoter librement et occuper des positions d'utilisation variées d'une plage étendue de positions possibles.

5. Miroir de courtoisie selon l'une des revendications 1 à 4, dans lequel, lorsque la monture de miroir (1) et l'élément de recouvrement articulé (2) sont en prise et lorsque ce dernier occupe la position de masquage de la surface réfléchissante, l'action combinée des faces de positionnement (14, 16) prévues sur les saillies (13) et les attaches (15) empêchent l'élément de recouvrement articulé (2) de quitter accidentiellement cette position, dans des conditions d'utilisation normales.
